# EUROPÄISCHE PATENTSCHRIFT

(11) **EP 2 192 830 B1**
(45) Veröffentlichungstag und Bekanntmachung des Hinweises auf die Patenterteilung: **09.11.2011**
(21) Anmeldenummer: 08835198.6
(22) Anmeldetag: 01.10.2008
(51) Int. Cl.: A01G 9/24

(54) **VORRICHTUNG ZUM GEGENLÄUFIGEN VERSCHWENKEN VON WENIGSTENS ZWEI DACHELEMENTEN EINES SATTELDACHES**
DEVICE FOR SWIVELING AT LEAST TWO ROOF ELEMENTS OF A RIDGE ROOF IN OPPOSITE DIRECTIONS
DISPOSITIF D'INCLINAISON EN SENS OPPOSÉS D'AU MOINS DEUX ÉLÉMENTS DE TOIT D'UN TOIT À DEUX VERSANTS

(30) Priorität: 04.10.2007 DE 102007047577
(43) Veröffentlichungstag der Anmeldung: 09.06.2010
(73) Patentinhaber: Dümmen, Tobias, 47495 Rheinberg (DE)
(72) Erfinder: Dümmen, Tobias, 47495 Rheinberg (DE)
(74) Vertreter: Demski, Siegfried
(86) Internationale Anmeldenummer: PCT/DE2008/001591
(87) Internationale Veröffentlichungsnummer: WO 2009/043329

(56) Entgegenhaltungen:
- WO-A-02/37949
- DE-A1-102005 052 247
- DE-U- 1 955 698
- US-A- 5 655 335

## Beschreibung

Die vorliegende Erfindung betrifft eine Vorrichtung zum Verschwenken von wenigstens zwei Dachelementen eines Satteldaches, insbesondere eines Gewächshauses, um parallel zueinander und zum Dachfirst angeordnete Schwenkachsen, wobei die Schwenkachsen jeweils an dem dachfirstfernen Ende der Dachelemente angeordnet sind. Weiter betrifft die Erfindung ein Satteldach, insbesondere für ein Gewächshaus, mit wenigstens zwei jeweils um eine Schwenkachse verschwenkbar gelagerten Dachelementen, wobei die Schwenkachsen parallel zueinander und zum Dachfirst sowie jeweils am dachfirstfernen Ende der Dachelemente angeordnet sind.

Im Sinne der Erfindung sind solche Satteldächer neben der Verwendung für Gewächshäuser beispielsweise auch für Wintergärten oder ähnliche Konstruktionen verwendbar.

Eine gattungsgemäße Dachkonstruktion für ein Gewächshaus ist beispielsweise in dem Gebrauchsmuster DE 1 955 698 beschrieben, die Binder aufweist, in denen unmittelbar am First Klappflügel verschwenkbar gelagert sind. Diese Klappflügel sind an ihren dachfirstfernen Enden verschwenkbar an der Dachkonstruktion angeordnet und können zur Be- und/oder Entlüftung des Gewächshauses mittels eines Antriebs gemeinsam verschwenkt werden. Der Antrieb dieser Dachkonstruktion weist jedoch einen relativ komplizierten Aufbau auf und ermöglicht zusammen mit den Klappflügeln keine optimale Be- und/oder Entlüftung des Gewächshauses, da ein von einer Seite kommender Wind entlang eines Klappflügels abgelenkt wird und somit nicht von dem jeweilig anderen Klappflügel eingefangen wird. Des Weiteren ist bei einer derartigen Dachkonstruktion nachteilig, dass die Verschwenkung der Klappflügel nicht in Abhängigkeit der jeweiligen Windverhältnisse, das heißt in Abhängigkeit der jeweiligen Windrichtung und/oder der jeweiligen Windstärke erfolgen kann, weil eine Konstruktion, wie sie in dem Gebrauchsmuster beschrieben ist, nicht bezüglich unterschiedlicher Windrichtungen verstellbar ist und zudem es durch das gemeinsame Verschwenken der Dachelemente bzw. Klappflügel unerheblich ist, ob höhere Windstärken oder geringere auftreten, da der Wind immer von einem Klappflügel nach oben abgelenkt wird und daher von dem anderen Klappflügel nur in sehr geringem Maß eingefangen werden kann.

Aus dem Dokument DE 10 2005 OS2 247 A1 ist ein weiteres Beispiel von Dachkonstruktion für ein Gewächshaus bekannt.

Ausgehend von diesem Stand der Technik ist es die Aufgabe der vorliegenden Erfindung, eine Vorrichtung zum Verschwenken von wenigstens zwei Dachelementen eines Satteldaches, insbesondere für ein Gewächshaus, um parallel zueinander und zum Dachfirst angeordnete Schwenkachsen bereitzustellen, welche einen einfachen Aufbau aufweist und mit der wenigstens zwei Dachelemente gemeinsam und gegenläufig verschwenkbar sind.

Diese Aufgabe wird erfindungsgemäß durch eine Vorrichtung nach Anspruch 1, gelöst. Vorteilhafte Ausgestaltungen der Vorrichtung sind in den Unteransprüchen 1 bis 6 offenbart.

Erfindungsgemäß ist vorgesehen, dass wenigstens eine senkrecht zu den Schwenkachsen angeordnete Verbindungsstrebe vorgesehen ist, welche jeweils endseitig verschwenkbar mit einem der beiden Dachelemente verbunden und mittels einer Stützkonstruktion verschwenkbar gelagert ist, wodurch die Dachelemente gegenläufig verschwenkbar sind. In den Verbindungsbereichen der Verbindungsstreben mit den Dachelementen können beispielsweise geeignete Verbindungselemente angeordnet sein, welche eine leichte Montage der Vorrichtung an einem Satteldach gewährleisten.

Bevorzugt sind mehrere Vebindungsstreben vorgesehen, die parallel zueinander und beispielsweise in gleichmäßigen Abständen über die gesamte Länge des Satteldaches verteilt sind, wodurch eine hochgradig stabile Dachkonstruktion realisierbar ist. Vorzugsweise sind diese Verbindungsstreben unmittelbar mit den Dachelementen verbunden, so dass keine weiteren Bauelemente erforderlich sind, was den einfachen Aufbau der Vorrichtung verdeutlicht. Zudem sind die Dachelemente durch diese Ausgestaltung der Vorrichtung gemeinsam und gegenläufig verschwenkbar, so dass ein seitlich auf das Satteldach auftreffender Wind entweder zur Belüftung beispielsweise eines Gewächshauses durch ein Dachelement aufgefangen oder zur Erzeugung eines Unterdrucks zur Entlüftung des Gewächshauses von einem Dachelement nach oben abgelenkt wird.

Diese Ausgestaltung der Vorrichtung schafft eine Verbindung zwischen den Dachelementen, durch die zum Einen die gegenläufige Verschwenkung der Dachelemente in Abhängigkeit voneinander erfolgen kann und zum Anderen eine Begrenzung der maximalen Verschwenkbarkeit der Dachelemente auf einfache Art und Weise realisierbar ist. Vorzugsweise ist die Verbindungsstrebe bei geschlossenem Satteldach mit den Dachelementen in gleicher Höhe verbunden, wobei es bei maximaler gegenläufiger Verschwenkung der Dachelemente dazu kommt, dass das nach unten, dass heißt vom Dachfirst weg verschwenkte Dachelement auf der Verbindungsstrebe zum Aufliegen kommt. Durch die Länge der Verbindungsstrebe wird dabei gleichzeitig eine Begrenzung der Verschwenkbarkeit des jeweilig anderen Dachelementes nach oben erreicht

Nach einer vorteilhaften Ausgestaltung der Erfindung ist vorgesehen, dass die Stützkonstruktion zwei Stützstreben aufweist, die einendseitig jeweils mit einem Ende der Verbindungsstrebe und anderendseitig miteinander verbunden sowie im Wesentlichen unterhalb der Verbindungsstrebe angeordnet sind. Durch diese Ausgestaltung wird eine Konstruktion in Form eines Dreiecks ausgebildet, welches auf einer seiner Ecken stehend angeordnet ist, wodurch auch schwere Dachelemente auf vorteilhafte Art und Weise abgestützt werden können. Diese untere Ecke bildet einen Auflagerpunkt aus, auf dem die Verbindungsstrebe über die Stützstreben lagerbar ist, sodass das Gewicht der Dachelemente sowohl im Bereich der Schwenkachsen durch geeignete Mittel, als auch von der Verbindungsstrebe aufgenommen werden kann.

Gemäß einer weiteren vorteilhaften Ausgestaltung der Erfindung ist an den miteinander verbundenen Enden der Stützstreben eine Verstelleinrichtung angeordnet. Diese Verstelleinrichtung dient zur räumlichen Verlagerung des Auflagerpunktes, welcher durch den Verbindungspunkt zwischen den beiden Stützstreben untereinander gegeben ist, sodass das durch Verbindungs- und Stützstreben gebildete Dreieck um eine zu seiner Fläche senkrechten Achse gedreht wird, wobei die Verbindungsstrebe derart bewegt wird, dass eine gegenläufige Verschwenkung der Dachelemente in gewünschter Art und Weise erfolgen kann. Mittels der Verstelleinrichtung kann die Verbindungsstrebe in dem Maße bewegt werden, welches für die gewünschte Be- und/oder Entlüftung erforderlich oder gewünscht ist. Die Verstellung kann dabei kontinuierlich oder graduell zwischen verschiedenen Verstellpositionen erfolgen. Des Weiteren kann vorgesehen sein, dass bei der Verwendung mehrerer Verbindungsstreben und der damit verbundenen Stützstreben eine gewünschte Anzahl der miteinander verbundenen Enden der Stützstreben mit einer entsprechenden Verstelleinrichtung versehen ist, um eine den Anforderungen entsprechend robuste Ausgestaltung des Satteldaches zu erreichen.

Es wird weiter vorgeschlagen, dass die Verstelleinrichtung ein Rad aufweist, welches auf einem Querträger abrollbar ist. Dieses stellt eine sehr einfache Ausgestaltung der Verstelleinrichtung dar, wobei der Querträger mit dem Satteldach selbst oder auch mit anderen Bauelementen, beispielsweise des Gewächshauses, verbunden sein kann. Welche dieser Ausgestaltungen gewählt wird, hängt von den jeweiligen Gegebenheiten vor Ort und insbesondere der Länge der Stützstreben ab, wobei auftretende Verstellkräfte kleiner werden, je länger die Stützstreben ausgebildet sind. Der Querträger kann beispielsweise rohrförmig ausgebildet sein, sodass er für das Rad der Verstelleinrichtung eine Schiene bildet, auf der das Rad abrollen kann. Für diese Ausgestaltung muss die Abrollfläche des Rades im Querschnitt konkav ausgebildet sein. Jedoch sind auch flächige oder T-Träger-förmige Ausbildungen oder ähnliches des Querträgers denkbar, wobei das Rad der Verstelleinrichtung mit einer entsprechenden, geeigneten Lauffläche zu versehen ist.

In vorteilhafter Weise weist der Querträger eine Zahnstange oder eine Verzahnung auf und das Rad ist als Zahnrad ausgebildet, dass auf der Zahnstange oder der Verzahnung abrollbar ist. Dieses stellt ebenso eine einfache Ausgestaltung der Verstelleinrichtung dar, wobei durch die Ausbildung des Rades als Zahnrad, welches mit seiner Verzahnung in eine Zahnstange oder eine Verzahnung des Querträgers eingreift, eine robuste und gleichzeitig variable Verstellung der Dachelemente mittels der Verstelleinrichtung erfolgen kann.

Eine weitere vorteilhafte Ausgestaltung der Erfindung sieht vor, dass die Verstelleinrichtung einen Antrieb aufweist. Dieser Antrieb kann in beliebiger Art und Weise, wie beispielsweise elektromotorisch, hydraulisch oder pneumatisch ausgebildet sein, und greift vorzugsweise an der Verstelleinrichtung an, sodass das Abrollen des Rades auf dem Querträger und die damit verbundene Verstellung der Dachelemente durch den Antrieb erzeugt wird. Jedoch sind auch andere Ausgestaltungen denkbar, bei denen der Antrieb an anderen Punkten der Verstellmechanik angreift. Auch können beispielsweise Ketten, andere gelenkige Glieder oder Getriebeelemente vorgesehen sein, welche eine angemessene Übersetzung der Antriebskraft auf den Verstellmechanismus erzeugen. Des Weiteren kann der Antrieb an eine Steuereinrichtung koppelbar sein, welche über Sensoren in der Lage ist, Windbedingungen in der Umgebung des Satteldaches zu detektieren, wobei die Steuereinrichtung auf Basis der detektierten Informationen Steuersignale an den Antrieb für die den jeweiligen Umgebungsbedingungen günstige Einstellung der Dachelemente senden. Durch diese Ausgestaltung muss eine Verstellung der Dachelemente nicht mehr manuell erfolgen, was jedoch in einer weiteren Ausführungsvariante des erfindungsgemäßen Satteldaches ebenso realisierbar ist, falls eine solche manuelle Verstellung gewünscht ist.

Des Weiteren ist es die Aufgabe der vorliegenden Erfindung, ein Satteldach, insbesondere für ein Gewächshaus, mit wenigstens zwei jeweils um eine Schwenkachse verschwenkbar gelagerten Dachelementen, wobei die Schwenkachsen parallel zueinander und zum Dachfirst sowie jeweils am dachfirstfernen Ende der Dachelemente angeordnet sind, bereitzustellen, welches eine optimale Be- und/oder Entlüftung beispielsweise eines Gewächshauses ermöglicht und zudem eine einfache Konstruktion aufweist.

Diese Aufgabe wird erfindungsgemäß durch ein Satteldach nach Anspruch 7 gelöst. Vorteilhafte Ausgestaltungen des Satteldaches sind in den Unteransprüchen 8 bis 10 offenbart.

Erfindungsgemäß weist das Satteldach eine vorbeschriebene Vorrichtung zum gegenläufigen Verschwenken der Dachelemente auf. Dadurch kann eine optimale Be-und/oder Entlüftung beispielsweise eines Gewächshauses erfolgen.

Statt der Anordnung herkömmlicher Einrichtungen zur Be- und/oder Entlüftung, beispielsweise in Form von Dachluken oder Klappflügeln, können bei dem erfindungsgemäßen Satteldach die beiden Dachhälften zumindest teilweise, vorzugsweise vollständig als verschwenkbar angeordnete Dachelemente ausgebildet sein, die jeweils als Ganzes verschwenkt werden können. Durch diese Ausgestaltung kann auf weitere Be- und/oder Entlüftungseinrichtungen verzichtet werden und es kann der jeweils geeignete Be- und/oder Entlüftungsspalt in Abhängigkeit der äußeren und inneren Verhältnisse eingestellt werden, wobei die gegenläufige Verschwenkung der Dachelemente diese Lufteintritts- beziehungsweise -austrittsöffnung im Bereich des Dachfirstes ausbildet, durch die Luft über die gesamte Länge des Satteldaches in den Innenraum des Satteldaches und somit eines entsprechenden mit einem solchen Satteldach versehenden Gewächshauses eindringen kann. Somit kann eine über die Länge eines Gewächshauses sehr gleichmäßige Be- und/oder Entlüftung erfolgen, wobei die Stärke der Be- und/oder Entlüftung über das Ausmaß reguliert wird, um das die beiden Dachelemente gegenläufig zueinander verschwenkt sind. Es handelt sich also bei dem erfindungsgemäßen Satteldach um eine sehr robuste Anordnung, welche zur homogenen Be- und/oder Entlüftung sehr variabel unter Berücksichtigung der jeweiligen Windbedingungen einstellbar ist.

Weiterhin ist vorgesehen, dass das Satteldach eine Abdeckleiste aufweist, die parallel zum Dachfirst und wenigstens teilweise auf einem dachfirstnahen Ende zumindest eines Dachelementes aufliegend angeordnet ist. Diese Abdeckleiste dient dazu, dass bei geschlossenem Satteldach, dass heißt, wenn sich die dachfirstnahen Enden der Dachelemente auf gleicher Höhe befinden, der zwischen diesen Enden befindliche Spalt, welcher sich über die gesamte Länge des Satteldaches erstreckt, mit der Abdeckleiste abgedeckt ist, sodass beispielsweise ein Eintritt von Regen oder anderweitiger Feuchtigkeit in den Innenraum des Satteldaches beziehungsweise eines entsprechenden Gewächshauses verhindert wird. Auch diese Ausgestaltung verdeutlicht, dass das erfindungsgemäße Satteldach zweckdienlich bei einfacher Ausgestaltung ausführbar ist.

Nach einer weiteren vorteilhaften Ausgestaltung der Erfindung ist die Abdeckleiste mit einem Beschwerungselement oder über eine Teleskopstange mit einem Befestigungselement verbunden. Diese Ausgestaltung verdeutlicht weiter den einfachen Aufbau des erfindungsgemäßen Satteldaches, bei dem die Abdeckleiste lediglich auf wenigstens ein Dachelement des Satteldaches aufgelegt ist und nicht anderweitig mit dem Satteldach verbunden ist. Befinden sich die beiden dachfirstnahen Enden der Dachelemente auf gleicher Höhe, stehen beide im Kontakt mit der Abdeckleiste, sodass ein wasserdichtes Satteldach gegeben ist. Werden hingegen die Dachelemente gegenläufig verschwenkt, so liegt die Abdeckleiste lediglich auf dem Dachelemente auf, welches nach oben verschwenkt wird, wobei die Abdeckleiste mit einem Beschwerungselement versehen ist, welches einen Anpressdruck zwischen Abdeckleiste und Ende dieses Dachelementes erzeugt, der ausreichend ist, um ein Lösen der Abdeckleiste von diesem Ende des Dachelementes zu verhindern. Das Beschwerungselement kann beispielsweise als Kette oder Stab, vorzugsweise aus Metall, ausgebildet sein. Im Fall der Verwendung einer Teleskopstange ist die Abdeckleiste mit einem Befestigungselement verbunden, welches beispielsweise als Element der Satteldachkonstruktion oder einer Gewächshauskonstruktion ausgebildet ist.

Ferner wird vorgeschlagen, dass die im Bereich des Dachfirstes angeordneten Enden der Dachelemente jeweils ein Dichtungselement aufweisen. Dieses Dichtungselement erstreckt sich vorzugsweise über die gesamte Länge eines Dachelementes im Bereich der dachfirstnahen Enden der selben und besteht bevorzugt aus Kunststoff oder Gummi, sodass schon hierdurch bei aneinanderliegenden dachfirstnahen Enden der Dachelemente ein Verschluss des Satteldaches im Bereich des Dachfirstes erzeugbar ist, welcher Verschluss noch durch die Anordnung einer Abdeckleiste verbessert wird. Die Dichtungselemente weisen im Querschnitt zudem eine solche Form auf, welche an die Querschnittsform der Abdeckleiste derart angepasst ist, dass die Abdeckleiste möglichst unverlierbar an wenigstens einer dieser Dichtungselemente durch einfaches Aufliegen auf diesem Dichtungselement verhindert wird.

Weitere Vorteile und Merkmale der vorliegenden Erfindung werden im Folgenden an Hand der Figuren beschrieben.

Dabei zeigen
- Fig. 1: eine perspektivische Darstellung eines Gewächshauses mit herkömmlichem Satteldach,
- Fig. 2.1: eine Querschnittdarstellung eines Gewächshauses mit einem Ausführungsbeispiel für eine erfindungsgemäße Vorrichtung in Kombination mit einem Ausführungsbeispiels für ein erfindungsgemäßes Satteldach in geschlossener Stellung,
- Fig. 2.2: eine Querschnittsdarstellung einer Detailansicht der Vorrichtung und des Satteldaches der Figur 2.1,
- Fig. 3.1: eine Querschnittdarstellung des Gewächshauses der Figur 2.1, wobei das Satteldach in geöffneter Stellung ist, in der die Dachelemente maximal gegenläufig verschwenkt sind,
- Fig. 3.2: eine Querschnittsdarstellung einer Detailansicht der Vorrichtung und des Satteldaches der Figur 3.1,
- Fig. 4.1: eine Querschnittdarstellung des Gewächshauses der Figur 2.1, wobei das Satteldach in weiterer geöffneter Stellung ist, in der die Dachelemente maximal gegenläufig verschwenkt sind,
- Fig. 4.2: eine Querschnittsdarstellung einer Detailansicht der Vorrichtung und des Satteldaches der Figur 4.1,
- Fig. 5: eine Detailansicht eines Ausführungsbeispiels für das erfindungsgemäße Satteldach mit einem Ausführungsbeispiel für eine erfindungsgemäße Vorrichtung und
- Fig. 6: in einer vergrößerten Ansicht den Auflagerpunkt mit einer beispielhaften Zahnradausführung.

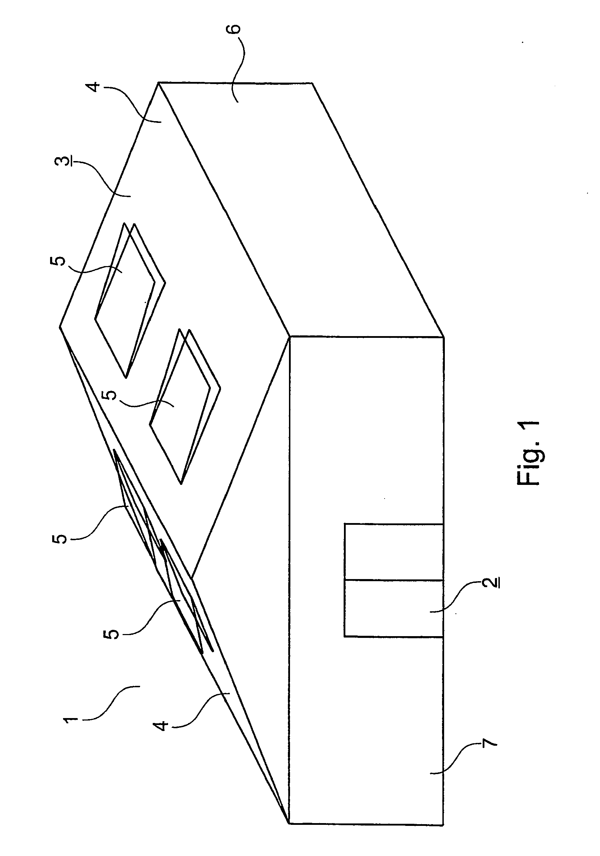

Figur 1 zeigt eine perspektivische Darstellung eines Gewächshauses 1, welches mit einer Tür 2 versehen ist. Diese Gewächshaus 1 weist ein herkömmliches Satteldach 3 auf, welches mit zwei geneigten Dachelementen 4 versehen ist, die in dieser Ausgestaltung jeweils mit zwei geöffneten Dachluken 5 ausgestattet sind. Über die Dachluken 5 erfolgt eine Be- und/oder Entlüftung des Gewächshauses 1, wobei schon in Figur 1 deutlich wird, dass durch eine derartige Anordnung von Dachluken 5 in den Dachelementen 4 keine homogene Be- und/oder Entlüftung des Gewächshauses erfolgen kann. Zudem weist in dieser Ausführungsform jedes Dachelement 4 zwei einzelne Dachluken 5 auf, welche meist unabhängig voneinander betätigt werden müssen. Zudem kann ein auf dem gezeigten Dachelement 4 auftreffender Wind nicht ausreichend aufgefangen werden, da dieser durch das Dachelement 4 im Wesentlichen nach oben abgelenkt wird und die Öffnungen der Dachluken 5 zu klein sind, um ausreichend vorbeiströmende Luft aufzunehmen. Das Satteldach 3 ist seitlich des Gewächshauses 1 auf Wänden 6 gelagert sowie vorder- und rückseitig mit weiteren Bauelementen 7 verschlossen.

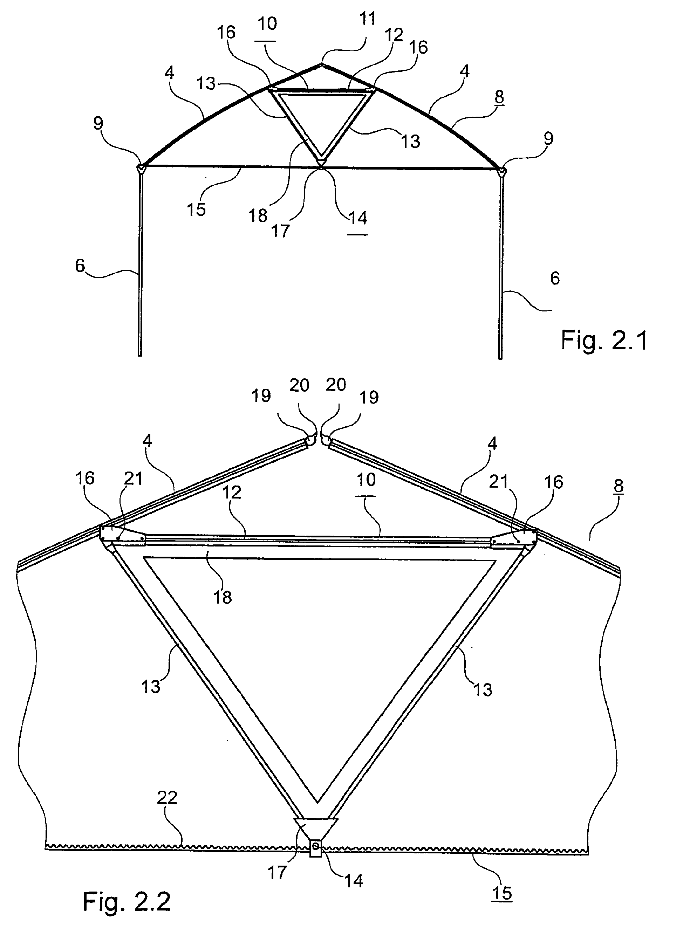

Eine entsprechende Be- und/oder Entlüftung ist wesentlich effektiver bei Verwendung eines erfindungsgemäßen Satteldaches 8, von dem Ausführungsbeispiele in den Figuren 2.1 bis 5 dargestellt sind. Dieses Satteldach 8 ist im Bereich der Dachtraufen 9 mit vertikalen Wänden 6 verbunden, welche im Wesentlichen den vertikalen Wänden 6 des Gewächshauses 1 der Figur 1 entsprechen. Die in dieser Ausführung gekrümmt ausgebildeten Dachelemente 4 sind jeweils um eine Schwenkachse verschwenkbar, die im Wesentlichen parallel zueinander verlaufend und im Wesentlichen jeweils entlang einer Dachtraufe 9 angeordnet sind. Des Weiteren weist dieses Satteldach 8 eine erfindungsgemäße Vorrichtung 10 zum gegenläufigen Verschwenken der Dachelemente 4 auf.

Das in Figur 2.1 gezeigte Satteldach 8 ist in geschlossener Position gezeigt, wobei die dachfirstnahen Enden der Dachelemente 4 zur Bildung des Dachfirstes 11 aneinander liegen. Die beiden Dachelemente 4 sind des Weiteren mit einer Verbindungsstrebe 12 verbunden, die endseitig jeweils mit einem Dachelement 4 schwenkbar verbunden und im Wesentlichen rechtwinklig zu den Schwenkachsen der Dachelemente 4 angeordnet ist. Die Verbindungsstrebe 12 ist zudem endseitig jeweils mit einem Ende einer Stützstrebe 13 verbunden, welche zudem an ihren jeweiligen anderen Enden miteinander verbunden sind, wobei die Stützstreben 13 im Wesentlichen unterhalb der Verbindungsstrebe 12 angeordnet sind. Somit bilden Verbindungsstrebe 12 und Stützstreben 13 ein Dreieck aus, welches auf einer seiner Spitzen stehend angeordnet ist. Diese Spitze des Dreiecks bildet ein Auflagerpunkt 14 aus, welcher auf einem Querträger 15 gelagert ist. Wird der Auflagerpunkt 14 auf dem Querträger 15 von links nach rechts oder umgekehrt bewegt, so werden die Dachelemente 4 gegenläufig verschwenkt. Zur Erzielung einer einfachen Montage und maximaler Schwenkbeweglichkeit sind die Verbindungsstrebe 12 und die Stützstreben 13 über Verbindungselemente 16 miteinander verbunden. Ein weiteres Verbindungselement 17 verbindet die beiden Stützstreben 13 im Auflagerpunkt 14. Zur Erhöhung der Stabilität der erfindungsgemäßen Vorrichtung 10 ist diese in dieser Ausführung mit einem Verstärkungselement 18 versehen, welches dreieckförmig ausgebildet und innerhalb des durch die Verbindungsstrebe 12 und die Stützstreben 13 gebildeten Dreiecks angeordnet ist.

Figur 2.2 zeigt eine Detailansicht des in Figur 2.1 gezeigten erfindungsgemäßen Satteldaches 8. Hier ist zu sehen, dass die dachfirstnahen Enden der Dachelemente 4 mit Dichtungselementen 19 versehen sind, welche bei geschlossenem Satteldach 8 aneinander liegen. Diese Dichtungselemente 19 sind in dieser Ausführung aus elastischem Material und weisen jeweils eine Dichtlippe 20 auf, welche bei geschlossenem Satteldach 8 mit einem Druck aneinandergedrückt werden, welcher ausreicht, um das Satteldach 8 am Dachfirst 11 gegen äußere Wettereinflüsse abzudichten. Die Verbindungselemente 16 und 17 sind in dieser Ausführung aus umgeformtem Blech gebildet und mit der Verbindungsstrebe 12, einer Stützstrebe 13 und einem Dachelement 4 bzw. mit den Stützstreben 13 verbunden. Diese Verbindung kann wie im gezeigten Fall beispielsweise durch Vernietung erfolgen, wozu die Nieten 21 vorgesehen sind. Das dreieckförmige Verstärkungselement 18 ist einstückig ausgebildet und auf geeignete Weise mit den übrigen Komponenten der Vorrichtung 10 verbunden. Das Verbindungselement 17 ist am Auflagerpunkt 14 angeordnet, welcher auf dem Querträger 15 aufliegt, wodurch ein Teil des Gewichtes der Dachelemente 4 über die Vorrichtung 10 von dem Querträger 15 aufgenommen wird. Der Querträger 15 weist in dieser Ausführung eine Verzahnung 22 auf, in die ein nicht dargestelltes Zahnrad eingreift, wodurch durch diese Form einer Verstelleinrichtung eine kontinuierliche Verlagerung der Auflagerpunktes 14 auf dem Querträger 15 und die damit verbundene Verschwenkung des dreieckförmigen Bestandteils der Vorrichtung 10 sowie die gegenläufige Verschwenkung der Dachelemente 4 erfolgen kann.

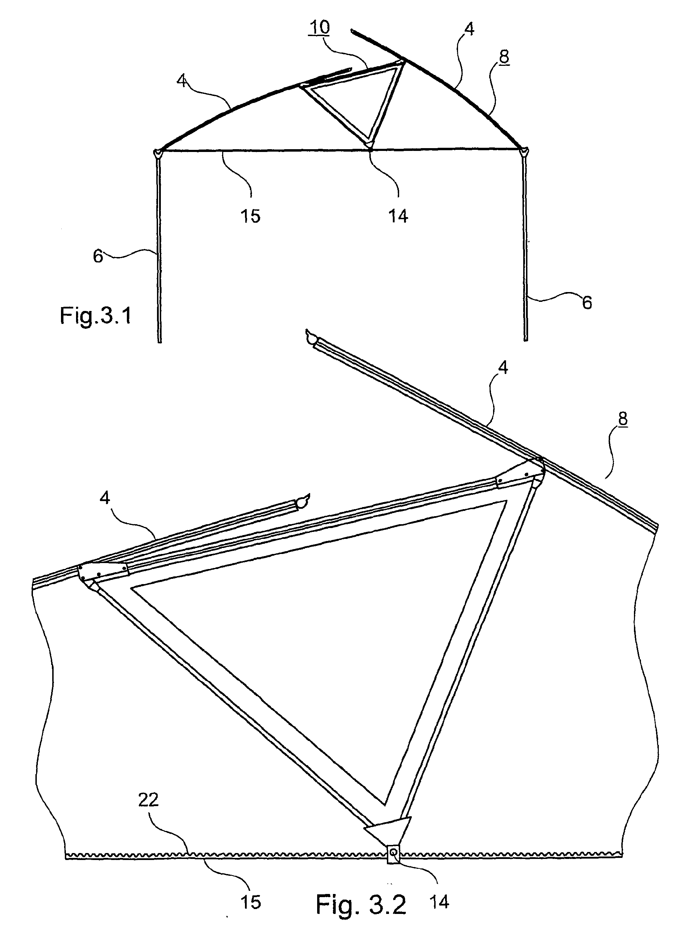

Figur 3.1 zeigt das in Figur 2.1 und 2.2 gezeigte, auf Wänden 6 gelagerte Satteldach 8 in einer Position, in der die Dachelemente 4 maximal gegenläufig verschwenkt sind, wobei das rechts dargestellte Dachelement 4 nach oben und das links dargestellte Dachelement 4 nach unten verschwenkt worden ist. Das links dargestellte Dachelement 4 kommt in dieser Position auf der Verbindungsstrebe 12 zu liegen, sodass eine weitere Verschwenkung des links dargestellten Dachelementes 4 nach unten beziehungsweise des rechts dargestellten Dachelementes 4 nach oben nicht erfolgen kann. Der Auflagerpunkt 14 ist auf dem Querträger 15 nach rechts verlagert, wodurch die Verschwenkung des Dreiecks und die damit verbunden Verschwenkung der Dachelemente 4 erzeugt wird. Da es sich auch bei Figur 3.1 um eine Querschnittdarstellung handelt, wird deutlich, dass sich die bei Verschwenkung ergebende Öffnung des Satteldaches 8, welche sich über die gesamte Länge des Satteldaches 8 erstreckt, eine homogene Be- und/oder Entlüftung eines entsprechenden Gewächshauses ermöglicht, sodass schon hier ein Vorteil gegenüber Konstruktionen aus dem Stand der Technik gegeben ist. Des Weiteren wird deutlich, dass das erfindungsgemäße Satteldach 8 einen sehr einfachen Aufbau aufweist, welcher trotzdem sehr stabil ausgebildet und effektiv nutzbar ist. Durch die Position des Auflagerpunktes 14 auf dem Querträger 15 kann die jeweilige Auslenkung der gegenläufigen Verschwenkung der Dachelemente 4 auf ein gewünschtes Maß eingestellt werden, sodass eine optimale Be- und/und Entlüftung unter Berücksichtigung der jeweiligen Windbedingungen erfolgen kann. Da es sich bei den Figuren 2.1 - 5 um Querschnittdarstellungen handelt, ist nicht gezeigt, dass das Satteldach 8 natürlich auch mehrere Verbindungsstreben 12 mit Stützstreben 13 aufweisen kann, welche beispielsweise in gleichmäßigen Abständen über die gesamte Länge des Satteldaches 8 angeordnet sind.

Figur 3.2 zeigt eine der Figur 2.2 entsprechende Ausführungsvariante des erfindungsgemäßen Satteldaches 8, bei dem die Dachelemente 4 durch die Verlagerung des Auflagerpunktes 14 auf dem mit einer Verzahnung 22 versehenen Querträger 15 gegenläufig bis zur maximalen Verschwenkstellung verschwenkt sind.

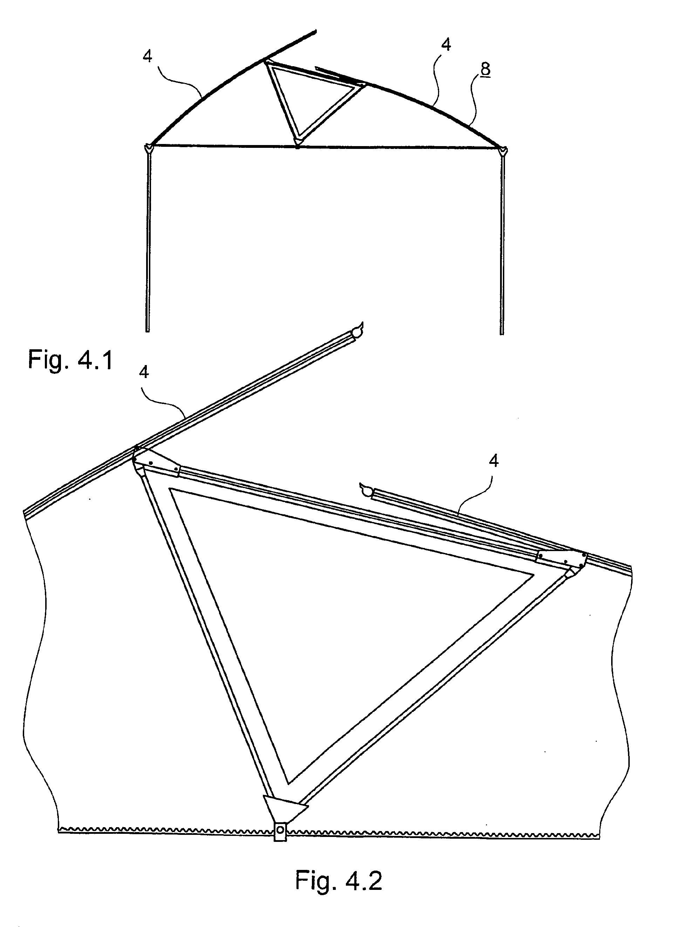

Figur 4.1 zeigt das in Figur 2.1 dargestellte Satteldach 8 in der im Vergleich zu Figur 3.1 anderen Position maximaler Auslenkung bezüglich der gegenläufigen Verschwenkung der Dachelemente 4, was die gleichen Vorteile wie die in Figur 3 gezeigte Stellung erzeugt.

Figur 4.2 entspricht im Wesentlichen der Darstellung der Figur 3.2, wobei die Dachelemente 4 jedoch in die andere Stellung mit maximaler Auslenkung verschwenkt sind.

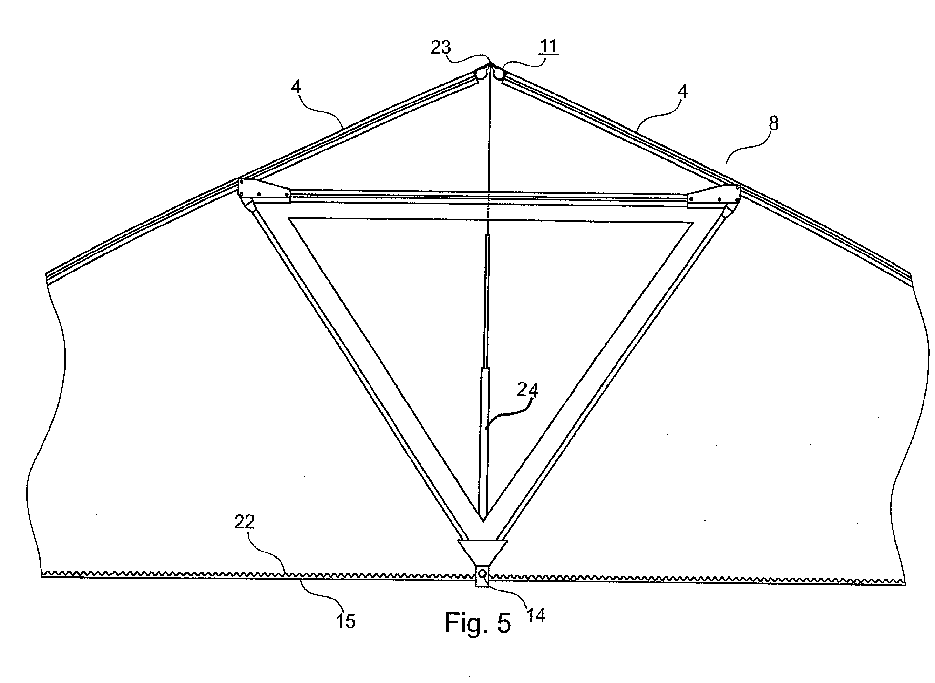

Figur 5 zeigt eine Detailansicht des Satteldaches 8, wobei der Querträger 15 wieder eine Verzahnung 22 aufweist, auf der der Auflagerpunkt 14 gelagert ist. Dazu ist am Auflagerpunkt 14 vorzugsweise ein nicht dargestelltes Zahnrad angeordnet, welches mit der Verzahnung 22 zusammenwirkt, sodass durch das Zahnrad und die Verzahnung 22 eine kontinuierlich verstellbare Verstelleinrichtung bereitgestellt wird. Des Weiteren ist Figur 5 eine Abdeckleiste 23 zu entnehmen, welche auf die den Dachfirst 11 bildenden Enden der Dachelemente 4 aufgelegt ist und somit das Satteldach 8 im Bereich des Dachfirstes 11 weiter abdichtet. Um mit einer ausreichenden Kraft auf den Enden der Dachelemente 4 aufzuliegen, ist an der Abdeckleiste 23 ein Beschwerungselement 24 angeordnet, welches in dieser Ausführung als Teleskopstange ausgebildet ist und verschwenkbar an einem weiteren Bestandteil des Satteldaches 8 angelenkt ist. Um eine möglichst formschlüssige Verbindung zwischen den dachfirstnahen Enden der Dachelemente 4 und der Abdeckleiste 23 zu erhalten, weisen diese Enden Dichtungselemente 19 auf, die vorzugsweise aus Kunststoff oder Gummi bestehen und mindestens teilweise der Form der Abdeckleiste 23 zum sicheren Halt derselben angepasst sind. Wenn die Dachelemente 4 gegenläufig verschwenkt werden, so nimmt das Dachelemente 4, welches nach oben verschwenkt wird, die Abdeckleiste 23 mit, wobei die Abdeckleiste 23 durch den formschlüssigen Sitz zwischen Abdeckleiste 23 und Dichtungselemente 19 unverlierbar auf diesem Dachelemente 4 beziehungsweise seinem Ende aufliegt.

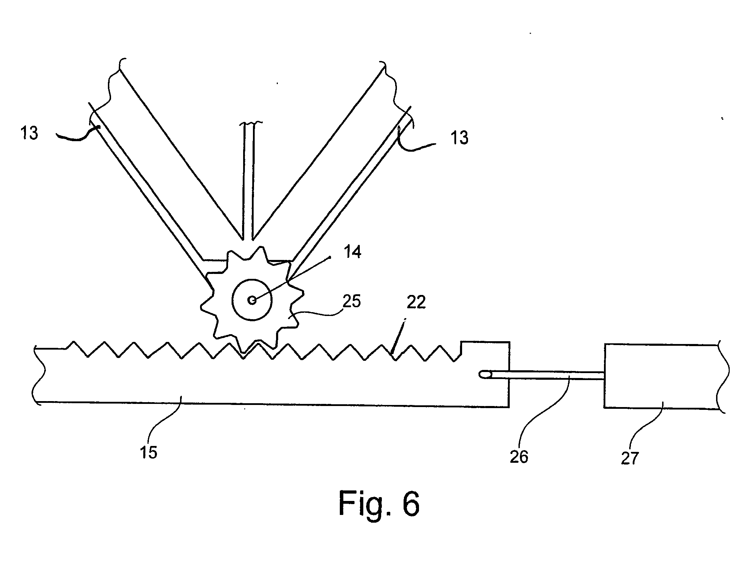

Figur 6 zeigt in einer vergrößerten Darstellung den aus Figur 5 bekannten Auflagerpunkt 14. In dieser beispielhaften Ausgestaltung des Auflagerpunktes 14 laufen die beiden Stützstreben 13 zusammen und sind mit einem Zahnrad 25 ausgestattet. Das Zahnrad 25 kämmt mit einer Verzahnung 22 des Querträgers 15, welcher über eine Schubstange 26 durch eine Antriebseinheit 27 horizontal bewegbar ist. Somit kann über die Antriebseinheit 27 die gesamte Vorrichtung zum Anheben der Dachelemente über eine Verlagerung des Auflagerpunktes 14 verschwenkt werden.

Aus dem Vorbeschriebenen wird deutlich, dass mit der vorliegenden Erfindung ein Satteldach 8 einfacher Konstruktion bereitgestellt wird, welches zudem unter Berücksichtigung der jeweiligen Windbedingungen eine homogene Be- und/oder Entlüftung mit einem solchen Satteldach 8 versehenen Gewächshauses sicherstellt.

### Bezugszeichenliste

- 1: Gewächshaus
- 2: Tür
- 3: herkömmliches Satteldach
- 4: Dachelement
- 5: Dachluke
- 6: Wand
- 7: Bauelement
- 8: erfindungsgemäßes Satteldach
- 9: Dachtraufe
- 10: Vorrichtung
- 11: Dachfirst
- 12: Verbindungsstrebe
- 13: Stützstrebe
- 14: Auflagerpunkt
- 15: Querträger
- 16: Verbindungselement
- 17: Verbindungselement
- 18: Verstärkungselement
- 19: Dichtungselement
- 20: Dichtlippe
- 21: Niete
- 22: Verzahnung
- 23: Abdeckleiste
- 24: Beschwerungselement
- 25: Zahnrad
- 26: Schubstange
- 27: Antriebseinheit

## Patentansprüche

1. Vorrichtung (10) zum Verschwenken von wenigstens zwei Dachelementen (4) eines Satteldaches (8), insbesondere eines Gewächshauses, um parallel zueinander und zum Dachfirst (11) angeordnete Schwenkachsen,
**gekennzeichnet durch**
wenigstens eine senkrecht zu den Schwenkachsen angeordnete Verbindungsstrebe (12), welche jeweils endseitig verschwenkbar mit einem der beiden Dachelemente (4) verbunden und mittels einer Stützkonstruktion verschwenkbar gelagert ist.

2. Vorrichtung (10) nach Anspruch 1,
**dadurch gekennzeichnet,**
**dass** die Stützkonstruktion zwei Stützstreben (13) aufweist, die einendseitig jeweils mit einem Ende der Verbindungsstrebe (12) und anderendseitig miteinander verbunden sowie im Wesentlichen unterhalb der Verbindungsstrebe (12) angeordnet sind

3. Vorrichtung (10) nach Anspruch 2,
**dadurch gekennzeichnet,**
**dass** an den miteinander verbundenen Enden der Stützstreben (13) eine Verstelleinrichtung angeordnet ist.

4. Vorrichtung (10) nach Anspruch 3,
**dadurch gekennzeichnet,**
**dass** die Verstelleinrichtung ein Rad, beispielsweise ein Zahnrad (25) aufweist, welches auf einem Querträger (15) abrollbar ist.

5. Vorrichtung (10) nach Anspruch 4,
**dadurch gekennzeichnet,**
**dass** der Querträger (15) eine Zahnstange oder eine Verzahnung (22) aufweist und das Rad als Zahnrad (25) ausgebildet auf der Zahnstange oder der Verzahnung (22) abrollbar ist.

6. Vorrichtung (10) nach einem der Ansprüche 3 bis 5,
**dadurch gekennzeichnet,**
**dass** die Verstelleinrichtung einen Antrieb (27) aufweist.

7. Satteldach (8), insbesondere für ein Gewächshaus, mit wenigstens zwei jeweils um eine Schwenkachse verschwenkbar gelagerten Dachelementen (4), wobei die Schwenkachsen parallel zueinander und zum Dachfirst (11) sowie jeweils am dachfirstfernen Ende der Dachelemente (4) angeordnet sind,
**gekennzeichnet durch**
eine Vorrichtung nach einem der Ansprüche 1 bis 6, mit der die Dachelemente (4) gegenläufig verschwenkbar sind.

8. Satteldach (8) nach Anspruch 7,
**gekennzeichnet durch**
eine Abdeckleiste (23), die parallel zum Dachfirst (11) und wenigstens teilweise auf zumindest einem dachfirstnahen Ende zumindest eines Dachelementes (4) aufliegend angeordnet ist.

9. Satteldach (8) nach Anspruch 8,
**dadurch gekennzeichnet,**
**dass** die Abdeckleiste (23) mit einem Beschwerungselement (24) verbunden ist.

10. Satteldach (8) nach einem der Ansprüche 7 bis 9,
**dadurch gekennzeichnet,**
**dass** die dachfirstnahen Enden der Dachelemente (4) jeweils ein Dichtungselement (19) aufweisen.

## Claims

1. Device (10) for swivelling at least two roof elements (4) of a gable roof (8), in particular of a greenhouse, about swivelling axes arranged in parallel to each other and to the ridge of the roof (11), **characterized by** at least one connecting brace (12) arranged perpendicularly with respect to the swivelling axes, the connecting braces (12) being each connected to one of the two roof elements (4) to be swivelling at the end side and being held by means of a supporting construction to be swivelling.

2. Device (10) according to claim 1, **characterized in that** the supporting construction comprises two connecting braces (12) which are connected on one end side each with one end of the connecting brace (12), and on the other end side are connected with each other, and which are arranged essentially underneath the connecting brace (12).

3. Device (10) according to claim 2, **characterized in that** an adjustment means is disposed at the ends of the connecting braces (13) connected with each other.

4. Device (10) according to claim 3, **characterized in that** the adjustment means comprises a wheel, for example a gearwheel (25), which can roll on a crossbeam (15).

5. Device (10) according to claim 4, **characterized in that** the crossbeam (15) comprises a toothed rack or a teething (22), and the wheel is embodied as a gearwheel (25) and can roll on the toothed rack or the teething (22).

6. Device (10) according to one of claims 3 to 5, **characterized in that** the adjustment means comprises a drive (27).

7. Gable roof (8), in particular for a greenhouse, with at least two roof elements (4) each held to be swivelling about a swivelling axis, wherein the swivelling axes are arranged in parallel to each other and to the ridge of the roof (11), and each at the end of the roof elements (4) remote from the ridge of the roof, **characterized by** a device according to one of claims 1 to 6 by means of which the roof elements (4) can be swivelled in opposite directions.

8. Gable roof (8) according to claim 7, **characterized by** a cover strip (23) which is arranged in parallel to the ridge of the roof (11) and at least partially rests on at least one end of at least one roof element (4) close to the ridge of the roof.

9. Gable roof (8) according to claim 8, **characterized in that** the cover strip (23) is connected with a weighting element (24).

10. Gable roof (8) according to one of claims 7 to 9, **characterized in that** the ends of the roof elements (4) close to the ridge of the roof each comprise one sealing element (19).

## Revendications

1. Dispositif (10) destiné à pivoter au moins deux éléments de toit (4) d'un toit en pente (8), en particulier d'une serre, autour d'axes de pivotement parallèles entre eux et disposés de façon à former le faîte (11), **caractérisé par** au moins une entretoise de liaison (12) disposée perpendiculairement aux axes de pivotement, qui est respectivement reliée pivotante côté extrémité avec un des deux éléments de toit (4) et logée pivotante à l'aide d'une structure de support.

2. Dispositif (10) selon la revendication 1, **caractérisé par le fait que** la structure de support présente deux entretoises de support (13), qui sont respectivement reliées du côté d'extrémité à une extrémité de l'entretoise de liaison (12) et reliées entre elles de l'autre côté d'extrémité et essentiellement disposées en dessous de l'entretoise de liaison (12).

3. Dispositif (10) selon la revendication 2, **caractérisé par le fait qu'**un dispositif de positionnement est disposé au niveau des extrémités reliées entre elles des entretoises de support (13).

4. Dispositif (10) selon la revendication 3, **caractérisé par le fait que** le dispositif de positionnement présente une roue, par exemple une roue dentée (25), qui peut être roulée sur une traverse (15).

5. Dispositif (10) selon la revendication 4, **caractérisé par le fait que** la traverse (15) présente une crémaillère ou une denture (22) et la roue sous la forme d'une roue dentée (25) peut être roulée sur la crémaillère ou sur la denture (22).

6. Dispositif (10) selon l'une des revendications 3 à 5, **caractérisé par le fait que** le dispositif de positionnement présente un entraînement (27).

7. Toit en pente (8), en particulier pour une serre, avec au moins deux éléments de toit respectifs logés pivotants autour d'un axe pivotant (4), les axes pivotants étant disposés parallèles entre eux et au faîte (11) ainsi que respectivement au niveau de l'extrémité éloignée du faîte des éléments de toit (4), **caractérisé par** un dispositif selon l'une des revendications 1 à 6, avec lequel les éléments de toit (4) sont pivotants dans le sens opposé.

8. Toit en pente (8) selon la revendication 7, **caractérisé par** une baguette couvre-joint (23), qui repose parallèle au faîte (11) et au moins partiellement sur au moins une extrémité proche du faîte d'au moins un élément de toit (4).

9. Toit en pente (8) selon la revendication 8, **caractérisé par le fait que** la baguette couvre-joint (23) est reliée à un élément de lestage (24).

10. Toit en pente (8) selon l'une des revendications 7 à 9, **caractérisé par le fait que** les extrémités à proximité du faîte (4) présentent respectivement un élément d'étanchéité (19).
